# EUROPEAN PATENT APPLICATION

(11) **EP 4 521 685 A1**
(43) Date of publication of application: **12.03.2025**
(21) Application number: 23811027.4
(22) Date of filing: 23.05.2023
(51) Int. Cl.: H04L 9/40, H04W 76/00

(54) **NETWORK DEVICE AND COMMUNICATION SYSTEM**

(30) Priority: 25.05.2022 CN 202210577854; 13.09.2022 CN 202211109943
(71) Applicant: Huawei Technologies Co., Ltd., Shenzhen, Guangdong 518129 (CN)
(72) Inventor: YANG, Qingping, Shenzhen, Guangdong 518129 (CN); GAO, Liangchuan, Shenzhen, Guangdong 518129 (CN); HU, Jian, Shenzhen, Guangdong 518129 (CN)
(74) Representative: Körber, Martin Hans
(86) International application number: PCT/CN2023/095693
(87) International publication number: WO 2023/226956

(57) **Abstract**

This application discloses a network device and a communication system, to centrally manage terminal-side devices. The network device includes at least one of a terminal discovery unit, a terminal registration unit, and a terminal authentication unit. The terminal discovery unit is configured to discover a plurality of terminal-side devices connected to the network device, where the plurality of terminal-side devices include a first terminal and a second terminal, and the first terminal and the second terminal use different communication protocols. The terminal registration unit is configured to register the first terminal and the second terminal with a controller. The terminal authentication unit is configured to perform at least one of authentication, certificate distribution, and secondary authentication on the first terminal and the second terminal. Because the network device may discover, register, or authenticate the first terminal and the second terminal that use the different communication protocols, this helps centrally manage the terminal-side devices that use the different communication protocols.

## Description

This application claims priorities to Chinese Patent Application No. 202210577854.0, filed with the China National Intellectual Property Administration on May 25, 2022 and entitled "INTERNET OF THINGS TERMINAL-NETWORK COLLABORATIVE SYSTEM", and to Chinese Patent Application No. 202211109943.9, filed with the China National Intellectual Property Administration on September 13, 2022 and entitled "NETWORK DEVICE AND COMMUNICATION SYSTEM", both of which are incorporated herein by reference in their entireties.

### TECHNICAL FIELD

This application relates to the field of internet of things technologies, and in particular, to a network device and a communication system.

### BACKGROUND

There are a large quantity of terminal-side devices with limited capabilities or resources in an internet of things system. These terminal-side devices are usually characterized by small traffic, a low rate, low power consumption, low costs, and the like due to low configuration, limited power supplying, or other reasons. Because terminal-side devices of different vendors or in different industries usually use different communication protocols, it is difficult to centrally manage terminal-side devices in the internet of things system.

### SUMMARY

A network device and a communication system are provided, to centrally manage terminal-side devices.

According to a first aspect, this application provides a network device. The network device includes at least one of a terminal discovery unit, a terminal registration unit, and a terminal authentication module. The terminal discovery unit is configured to discover a plurality of terminal-side devices connected to the network device, where the plurality of terminal-side devices include a first terminal and a second terminal, and the first terminal and the second terminal use different communication protocols. The terminal registration unit is configured to register the first terminal and the second terminal with a controller. The terminal authentication unit is configured to perform at least one of authentication, certificate distribution, and secondary authentication on the first terminal and the second terminal.

Because the network device may discover, register, or authenticate the first terminal and the second terminal that use different communication protocols, this helps centrally manage terminal-side devices that use different communication protocols.

Optionally, the network device further includes a terminal communication unit, and the terminal communication unit is configured to separately route data for the first terminal and the second terminal. In this way, data can be routed for the terminal-side devices using different communication protocols.

Optionally, the network device further includes a terminal-network collaborative unit, the terminal-network collaborative unit is configured to route data for a target terminal according to a network requirement policy of the target terminal, and the target terminal is the first terminal or the second terminal. In this way, differentiated network services can be provided for different terminal-side devices according to different network requirement policies.

Optionally, the network requirement policy indicates at least one of an encryption policy for the data, a scheduling policy for the data, and a caching policy for the data.

Optionally, the network requirement policy is determined based on requirement information of the target terminal, and the requirement information indicates at least one of the following information: a transmission bandwidth of the data, a transmission delay of the data, a transmission packet loss rate of the data, and a transmission priority of the data.

Optionally, the first terminal and/or the second terminal are/is dumb terminals/a dumb terminal. In this way, dumb terminals using different communication protocols in the internet of things can be centrally managed.

According to a second aspect, this application provides a communication system, including a first terminal, a second terminal, and a network device, where the first terminal and the second terminal have different communication protocols. The network device is configured to discover the first terminal and the second terminal that are connected to the network device, and/or register the first terminal and the second terminal with a controller, and/or perform at least one of authentication, certificate distribution, and secondary authentication on the first terminal and the second terminal.

Optionally, the first terminal and/or the second terminal are/is configured to determine communication protocols/a communication protocol of the first terminal and/or the second terminal from a plurality of communication protocols based on link types/a link type of the first terminal and/or the second terminal. In this way, there is no need to configure a communication protocol for a terminal-side device, and the terminal-side device may communicate with the network device by using a communication protocol corresponding to a link type of the terminal-side device. The communication protocol may include a plurality of protocols corresponding to the link type of the terminal-side device, and different protocols may be applied to different interaction processes with the network device. For example, the plurality of protocols include at least one of a discovery protocol, a registration protocol, and an authentication protocol.

Optionally, the network device is further configured to separately route data for the first terminal and the second terminal. In this way, data can be routed for terminal-side devices using different communication protocols.

Optionally, the network device is further configured to route data for a target terminal according to a network requirement policy of the target terminal, and the target terminal is the first terminal or the second terminal. In this way, differentiated network services can be provided for different terminal-side devices according to different network requirement policies.

Optionally, the network requirement policy indicates at least one of an encryption policy for the data, a scheduling policy for the data, and a caching policy for the data.

Optionally, the network requirement policy is determined based on requirement information of the target terminal, and the requirement information indicates at least one of the following information: a transmission bandwidth of the data, a transmission delay of the data, a transmission packet loss rate of the data, and a transmission priority of the data.

Optionally, the target terminal is configured to determine the requirement information based on application information of a service application, and send the requirement information to the network device. In this way, differentiated network requirement policies can be provided for different service applications, to provide appropriate network services for the service applications.

Optionally, the first terminal and/or the second terminal are/is dumb terminals/a dumb terminal. In this way, dumb terminals using different communication protocols in the internet of things can be centrally managed.

Optionally, the communication system further includes the controller.

According to a third aspect, this application provides a communication system. The communication system includes a controller and a network device, where the network device is the network device provided in any one of the first aspect or the possible implementations of the first aspect.

According to a fourth aspect, this application provides a communication method. The communication method may be applied to a network device. The method includes: discovering a first terminal and a second terminal that are connected to the network device, and/or registering the first terminal and the second terminal with a controller, and/or performing at least one of authentication, certificate distribution, and secondary authentication on the first terminal and the second terminal.

Optionally, the method further includes: separately routing data for the first terminal and the second terminal. In this way, data can be routed for terminal-side devices using different communication protocols.

Optionally, the method further includes: routing data for a target terminal according to a network requirement policy of the target terminal. The target terminal is the first terminal or the second terminal. In this way, differentiated network services can be provided for different terminal-side devices according to different network requirement policies.

Optionally, the network requirement policy indicates at least one of an encryption policy for the data, a scheduling policy for the data, and a caching policy for the data.

Optionally, the network requirement policy is determined based on requirement information of the target terminal, and the requirement information indicates at least one of the following information: a transmission bandwidth of the data, a transmission delay of the data, a transmission packet loss rate of the data, and a transmission priority of the data.

Optionally, the first terminal and/or the second terminal are/is dumb terminals/a dumb terminal. In this way, dumb terminals using different communication protocols in the internet of things can be centrally managed.

According to a fifth aspect, this application provides a network device, and the network device includes a processor and a memory. The memory is configured to store computer instructions. The processor is configured to invoke the computer instructions, to enable the network device to perform the communication method in any one of the fourth aspect and the implementations of the fourth aspect, to implement a function of the network device in any one of the first aspect and the implementations of the first aspect. Details are not described herein again.

According to a sixth aspect, this application provides a computer-readable storage medium. The computer-readable storage medium stores a program. When executing the program, a computer performs the device communication method in any one of the fourth aspect and the implementations of the fourth aspect, to implement a function of the network device in any one of the first aspect and the implementations of the first aspect. Details are not described herein again.

According to a seventh aspect, this application provides a computer program product. When the computer program product is executed on a computer, the computer performs the device communication method in any one of the fourth aspect and the implementations of the fourth aspect, to implement a function of the network device in any one of the first aspect and the implementations of the first aspect. Details are not described herein again.

Beneficial effects shown in the fifth aspect to the seventh aspect of this application are similar to those shown in the fourth aspect. Details are not described herein again.

### BRIEF DESCRIPTION OF DRAWINGS

FIG. 1 shows an example of a system architecture according to this application;
FIG. 2 shows an example of a possible structure of a computing device;
FIG. 3 shows an example of a possible structure of a network device shown in FIG. 1;
FIG. 4 shows an example of a possible structure of a target terminal;
FIG. 5-1 and FIG. 5-2 show examples of other possible structures of the system architecture shown in FIG. 1;
FIG. 6 shows an example of a possible procedure in which a target terminal accesses a target network;
FIG. 7 shows an example of a possible procedure in which a target terminal accesses a gateway; and
FIG. 8 shows an example of a possible procedure of terminal-network collaboration.

### DESCRIPTION OF EMBODIMENTS

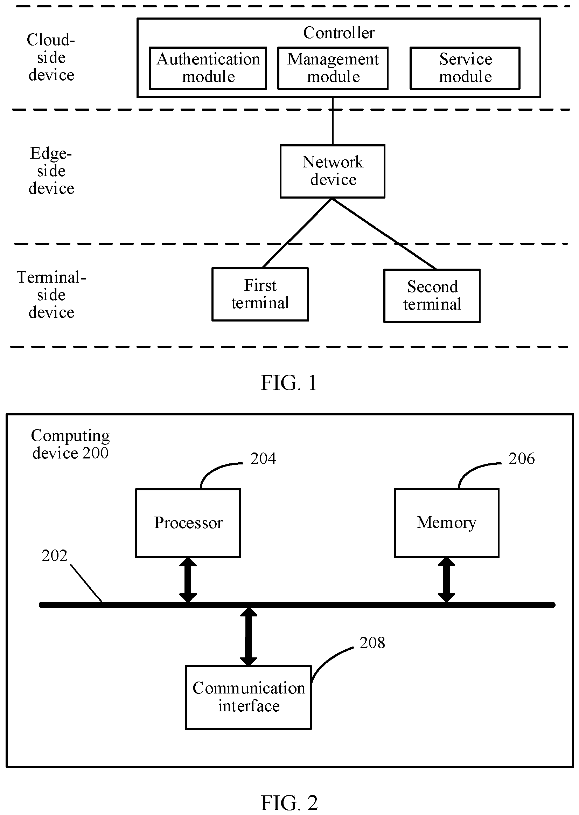

This application provides a system architecture. FIG. 1 shows an example of a possible structure of the system architecture. Refer to FIG. 1. The system architecture includes a terminal-side device and an edge-side device, and a communication connection is established between the terminal-side device and the edge-side device.

Refer to FIG. 1. The system architecture includes at least two terminal-side devices. In this application, the two terminal-side devices are respectively referred to as a first terminal and a second terminal. The first terminal or the second terminal is referred to as a target terminal, and a communication protocol of the target terminal is referred to as a target communication protocol. Optionally, the target terminal is a dumb terminal (or referred to as a thin client or an internet of things terminal).

FIG. 2 shows an example of a possible structure of a computing device. Optionally, a structure of the target terminal may be shown in FIG. 2. Refer to FIG. 2. A computing device 200 includes a bus 202, a processor 204, a memory 206, and a communication interface 208. The processor 204, the memory 206, and the communication interface 208 communicate with each other through the bus 202. The bus 202 may be a peripheral component interconnect (peripheral component interconnect, PCI) bus, an extended industry standard architecture (extended industry standard architecture, EISA) bus, or the like. For ease of representation, only one line is used to represent the bus in FIG. 2. However, this does not indicate that there is only one bus or one type of bus. The bus 202 may include a path for transmitting information between components (for example, the memory 206, the processor 204, and the communication interface 208) of the computing device 200. The processor 204 may include any one or more of processors such as a central processing unit (central processing unit, CPU), a graphics processing unit (graphics processing unit, GPU), a microprocessor (microprocessor, MP), or a digital signal processor (digital signal processor, DSP). The memory 206 may include a volatile memory (volatile memory), for example, a random access memory (random access memory, RAM). The processor 204 may further include a non-volatile memory (non-volatile memory), for example, a read-only memory (read-only memory, ROM), a flash memory, a hard disk drive (hard disk drive, HDD), or a solid-state drive (solid-state drive, SSD). The communication interface 208 uses a transceiver module, for example, but not limited to, a network interface card or a transceiver, to implement communication between the computing device 200 and another device or a communication network.

In comparison with user equipment or a server, a dumb terminal have low configurations, limited resources, and weak security protection. Therefore, the dumb terminal is a resource-limited device. For example, performance of a processor of the target terminal is low, a capacity of the memory is small, and bandwidth of a network interface is small.

In addition, a communication protocol of the first terminal and a communication protocol the second terminal are different. It is assumed that communication protocols of the first terminal include a first communication protocol, communication protocols of the second terminal include a second communication protocol, and the first communication protocol is different from the second communication protocol.

Optionally, the first communication protocol and the second communication protocol are communication protocols in different communication technologies. For example, the first communication protocol and the second communication protocol are communication protocols of any two different wireless communication technologies in a radio frequency identification (radio frequency identification, RFID) technology, Bluetooth low energy (Bluetooth low energy, BLE), wireless fidelity (wireless fidelity, Wi-Fi), Ethernet (Ethernet, ETH), and power line communication (power line communication, PLC).

Optionally, the first communication protocol and the second communication protocol are communication protocols in a same communication technology. For example, the first communication protocol and the second communication protocol are different Wi-Fi-based private protocols.

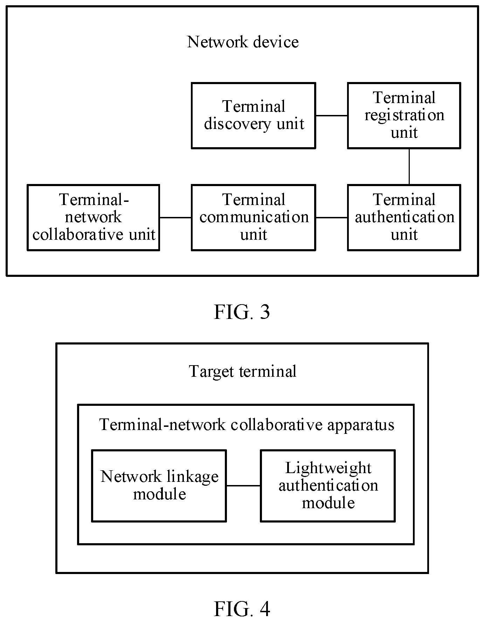

Because the first communication protocol is different from the second communication protocol, to centrally manage the first terminal and the second terminal in the system architecture shown in FIG. 1, referring to FIG. 3, this application provides a possible design of the edge-side device.

Refer to FIG. 1. The system architecture includes at least one edge-side device, and the edge-side device is referred to as a network device in this application. Optionally, the network device is a gateway or an access device. The access device may be, for example, a switch, a router, or an access point (access point, AP).

FIG. 3 shows an example of a possible structure of the network device. Refer to FIG. 3. The network device includes a terminal discovery unit. The terminal discovery unit is configured to discover the first terminal and the second terminal. Optionally, the terminal discovery unit selects a corresponding discovery rule according to a communication protocol of a terminal to discover the terminal. For example, the terminal discovery unit selects a first discovery rule to discover the first terminal, and discovers the second terminal according to a second discovery rule. In addition, the first discovery rule is different from the second discovery rule.

In some examples, the first discovery rule and the second discovery rule indicate different discovery protocols. In this application, a discovery protocol indicated by the first discovery rule and a discovery protocol indicated by the second discovery rule are respectively referred to as a first discovery protocol and a second discovery protocol, and the first discovery protocol is different from the second discovery protocol. It is assumed that the first communication protocol is a Wi-Fi protocol, and the second communication protocol is an ETH protocol. Optionally, the discovery protocol indicated by the first discovery rule is a beacon (beacon) protocol, and the discovery protocol indicated by the second discovery protocol is a dynamic host configuration protocol (dynamic host configuration protocol, DHCP), a domain name system (domain name system, DNS) protocol, an 802.1X protocol, or the like.

In some examples, the terminal discovery unit discovers the first terminal by exchanging a first discovery protocol packet with the first terminal, and the terminal discovery unit discovers the second terminal by exchanging a second discovery protocol packet with the second terminal. The first discovery protocol packet is a packet encapsulated by using the first discovery protocol, and the second discovery protocol packet is a packet encapsulated by using the second discovery protocol. For example, the first discovery protocol packet is a beacon frame, and the second discovery protocol packet is a DHCP packet.

Optionally, the first discovery protocol packet includes a first discovery packet sent by the first terminal to the network device, and the second discovery protocol packet includes a second discovery packet sent by the second terminal to the network device. The first discovery packet and the second discovery packet are obtained through encapsulation by using the first discovery protocol and the second discovery protocol respectively. The terminal discovery unit may decapsulate the first discovery packet according to the first discovery protocol to discover the first terminal, and may decapsulate the second discovery packet according to the second discovery protocol to discover the second terminal. Optionally, the first discovery packet includes electronic identity information (or referred to as identity information) of the first terminal, and the second discovery packet includes electronic identity information of the second terminal. Specific content of the electronic identity information is not limited in this application. Optionally, the electronic identity information includes at least one information of a serial number (serialno, SN) of the terminal, a terminal type, and a terminal brand.

Optionally, the first discovery protocol packet includes a first discovery response packet sent by the network device to the first terminal, and the second discovery protocol packet includes a second discovery response packet sent by the network device to the second terminal. The network device may obtain the first discovery response packet through encapsulation by using the first discovery protocol, and send the first discovery response packet to the first terminal, so that the first terminal discovers the network device. In addition, the network device may obtain the second discovery response packet through encapsulation by using the second discovery protocol, and send the second discovery response packet to the second terminal, so that the second terminal discovers the network device.

It can be learned that the network device may be provided with the terminal discovery unit to discover dumb terminals that use different communication protocols.

Optionally, the terminal discovery unit implements central-side processing for the first terminal and the second terminal to automatically access the network. The central-side processing includes terminal access packet information check and matching, terminal information parsing and encapsulation, interaction between a terminal and an authentication unit, and the like.

Optionally, refer to FIG. 1. The system architecture further includes at least one cloud-side device. In this application, the cloud-side device is referred to as a controller. Optionally, refer to FIG. 1. The controller may include a management module, and the management module is configured to provide a management service. Optionally, the management module is configured to register the first terminal and the second terminal. A process in which the management module registers a terminal is not limited in this application. The following uses an example in which the management module registers the target terminal to describe the process in which the management module registers the terminal, where the target terminal is the first terminal or the second terminal.

Optionally, the management module sends registration result information to the network device based on a registration request sent by the network device, where the registration request is used to request to register the target terminal, and the registration result information indicates that the registration request is approved or rejected.

Optionally, after obtaining the registration request, the management module triggers a manual approval process or an automatic approval process, to determine to approve or reject the registration request. If the registration request is approved, optionally, the management module may include, in the registration result information, a terminal identifier allocated to the target terminal, where the terminal identifier (device ID) is, for example, an internet of things communication handle.

Optionally, the management module is further configured to manage the first terminal, the second terminal, and the network device (including basic management services such as configuration and visualization).

Optionally, refer to FIG. 3. The network device further includes a terminal registration unit. The terminal registration unit is configured to register the first terminal and the second terminal with the controller. A process in which the terminal registration unit registers a terminal with the controller is not limited in this application. The following uses an example in which the terminal registration unit registers the target terminal with the controller to describe the process in which the terminal registration unit registers the target terminal with the controller, where the target terminal is the first terminal or the second terminal.

Optionally, after the terminal discovery unit discovers the target terminal, the terminal registration unit sends the registration request to the controller on behalf of the target terminal, and receives the registration result information delivered by the controller. For the registration request and the registration result information, refer to the foregoing related content. Details are not described herein again. When the registration result information indicates that the registration request is approved, the terminal registration unit sends the terminal identifier carried in the registration result information to the target terminal.

Optionally, after receiving a registration request packet sent by the target terminal, the terminal discovery unit sends the registration request to the controller. The registration request packet is used to request to register the target terminal with the network device or the controller.

Optionally, the terminal registration unit is configured to implement registration application processing of the terminal and the controller, generate the terminal identifier, manage a matching relationship between a terminal and a center, and the like.

Optionally, refer to FIG. 1. The controller includes an authentication module, and the authentication module is configured to provide an authentication service. For example, the authentication module is configured to authenticate the first terminal and the second terminal. A process in which the authentication module authenticates a terminal is not limited in this application. The following uses an example in which the authentication module authenticates the target terminal to describe the process in which the authentication module authenticates the terminal, where the target terminal is the first terminal or the second terminal.

Optionally, the authentication module sends authentication result information to the network device based on an authentication request sent by the network device, where the authentication request is used to request to authenticate the target terminal, and the authentication result information indicates that the authentication request is approved or rejected. Optionally, the authentication request carries electronic identity information of the target terminal.

Optionally, when the network device is a gateway, the authentication request is used to request to enable the target terminal to access the gateway.

Optionally, when the network device is an access device of a target network, the authentication request is used to request to enable the target terminal to access the target network. Optionally, the target network is a local area network.

Optionally, refer to FIG. 3. The network device further includes a terminal authentication unit. In some examples, the terminal authentication unit is configured to authenticate the first terminal and the second terminal. Optionally, the terminal authentication unit may separately perform authentication of the controller on behalf of the first terminal and the second terminal. A process in which the terminal authentication unit authenticates a terminal is not limited in this application. The following uses an example in which the terminal authentication unit authenticates the target terminal to describe the process in which the terminal authentication unit authenticates the terminal, where the target terminal is the first terminal or the second terminal.

Optionally, after the terminal discovery unit discovers the target terminal, the terminal authentication unit sends an authentication request to the controller, and receives authentication result information delivered by the controller. For the authentication request and the authentication result information, refer to the foregoing related content. Details are not described herein again. Optionally, after receiving an authentication request packet sent by the target terminal, the terminal authentication unit sends the authentication request to the controller. The authentication request packet is used to request to authenticate the target terminal. Optionally, the authentication request packet carries the electronic identity information of the target terminal.

Optionally, the authentication module of the controller is further configured to distribute certificates to the first terminal and the second terminal. The following uses an example in which the authentication module distributes a certificate to the target terminal to describe a process in which the authentication module distributes a certificate to a terminal, where the target terminal is the first terminal or the second terminal. Optionally, after determining that the authentication request is approved, the authentication module includes authentication information in the authentication result information delivered to the network device. Optionally, the authentication information includes certificate information, a password, or the like. The certificate information may include a device certificate.

Optionally, the terminal authentication unit is further configured to distribute certificates to the first terminal and the second terminal. A process in which the terminal authentication unit distributes a certificate to a terminal is not limited in this application. The following uses an example in which the terminal authentication unit distributes a certificate to the target terminal to describe the process in which the terminal authentication unit distributes the certificate to the terminal, where the target terminal is the first terminal or the second terminal. Optionally, after receiving the authentication result information delivered by the controller, the terminal authentication unit sends the authentication information carried in the authentication result information to the target terminal. For the authentication result information and the authentication information, refer to the foregoing related content. Details are not described herein again.

After obtaining the authentication information delivered by the network device, the target terminal may store the authentication information. Then, the target terminal may perform security authentication and encrypted communication based on certificate information. Therefore, the network device can automatically and securely enable the target terminal to access the target network or the gateway.

In some examples, the terminal authentication unit is configured to perform secondary authentication on the first terminal and the second terminal. Optionally, the terminal authentication unit may separately perform secondary authentication of the controller on behalf of the first terminal and the second terminal. A process in which the terminal authentication unit performs secondary authentication on a terminal is not limited in this application. The following uses an example in which the terminal authentication unit performs secondary authentication on the target terminal to describe the process in which the terminal authentication unit performs secondary authentication on the terminal, where the target terminal is the first terminal or the second terminal.

Optionally, after the terminal authentication unit delivers the authentication information to the target terminal, the target terminal may send, to the network device, an access request that carries the authentication information, and the terminal authentication unit may request, based on the access request, the controller to perform secondary authentication on the target terminal. For the authentication information, refer to the foregoing related content. Details are not described herein again.

In some examples, the terminal authentication unit may perform at least one of authentication, certificate distribution, and secondary authentication on the first terminal and the second terminal.

In some examples, the terminal authentication unit is further configured to manage authentication information of the first terminal and the second terminal. For example, the terminal authentication unit is configured to update or revoke the authentication information of the first terminal and the second terminal. In this way, complexity of managing the authentication information by the first terminal and the second terminal is reduced, and overheads of the first terminal and the second terminal are reduced.

Optionally, refer to FIG. 1. The controller includes a service module, and the service module is configured to separately exchange data with the first terminal and the second terminal, to implement an internet of things service. For either of the first terminal and the second terminal (referred to as the target terminal), data sent by the target terminal to the service module is referred to as uplink data (or service data), and data sent by the service module to the target terminal is referred to as downlink data (or a control instruction) in this application. A type of the uplink data and a type of the downlink data are related to a type of the internet of things service. Optionally, the internet of things service includes asset management, smart home management, and/or the like. The smart home management is used as an example. It is assumed that the first terminal is a smart fire alarm device. The first terminal may obtain detection data of an ambient temperature, and then report the detection data (that is, the uplink data) to the controller. The service module in the controller may determine, based on the detection data, whether a fire exists. When the fire exists, the service module delivers the control instruction (that is, the downlink data) to the first terminal, to control the first terminal to inform a user of the fire.

Optionally, refer to FIG. 3. The network device further includes a terminal communication unit, and the terminal communication unit is configured to separately route data for the first terminal and the second terminal. In some examples, the terminal communication unit is configured to route data between the target terminal and the controller. For example, the terminal communication unit is configured to route the uplink data from the target terminal to the controller, and route the downlink data from the controller to the target terminal.

In some examples, the first terminal encapsulates and sends the uplink data (referred to as first uplink data) to the network device according to the first communication protocol, and the second terminal encapsulates and sends the uplink data (referred to as second uplink data) to the network device according to the second communication protocol. The terminal communication unit is configured to parse the first uplink data according to the first communication protocol, parse the second uplink data according to the second communication protocol, then separately encapsulate the first uplink data and the second uplink data according to a third communication protocol, and separately send the first uplink data and the second uplink data to the controller. The third communication protocol may be the first communication protocol or the second communication protocol, or the third communication protocol is a communication protocol other than the first communication protocol and the second communication protocol. For example, the first communication protocol and the second communication protocol are respectively the BLE protocol and the Wi-Fi protocol, and the third communication protocol is the ETH protocol.

After receiving the first uplink data, the controller may generate first downlink data. Similarly, after receiving the second uplink data, the controller may generate second downlink data. In some examples, the controller separately encapsulates the first downlink data and the second downlink data according to the third communication protocol, and then separately sends the encapsulated first downlink data and the encapsulated second downlink data to the network device. The terminal communication unit is configured to separately parse the received first downlink data and the received second downlink data according to the third communication protocol; then encapsulate the first downlink data according to the first communication protocol, and send the encapsulated first downlink data to the first terminal; and encapsulate the second downlink data according to the second communication protocol, and send the encapsulated second downlink data to the second terminal.

It can be learned that, the terminal communication unit provides uniform heterogeneous communication channels for the first terminal and the second terminal, supports abstraction and unification of multiple physical channels such as Wi-Fi, BLE, and ETH, and implements automatic routing.

Optionally, refer to FIG. 3. The network device further includes a terminal-network collaborative unit. The terminal-network collaborative unit is configured to obtain requirement information of the target terminal, and determine a network requirement policy of the target terminal based on the requirement information. The terminal communication unit is configured to route data for the target terminal according to the network requirement policy. Optionally, the requirement information of the target terminal may be reported by the target terminal. Optionally, the requirement information indicates at least one of the following information: a transmission bandwidth of data, a transmission delay of data, a transmission packet loss rate of data, a transmission priority of data, and the like. Optionally, the network requirement policy indicates at least one of an encryption policy for the data, a scheduling policy for the data, and a caching policy for the data.

It can be learned that the terminal-network collaborative unit performs resource scheduling and data distribution according to the network requirement policy of the target terminal, and this helps implement an optimal processing policy in a process of routing the data for the target terminal.

Optionally, FIG. 3 is a functional block diagram of the network device. Optionally, a structure of the network device is shown in FIG. 2. A unit shown in FIG. 3 is a software functional module generated after the processor 204 reads program instructions stored in the memory 206. Division of software functional modules shown in FIG. 3 is merely logical function division.

Optionally, the network device supports a plurality of communication protocols (referred to as a terminal-network collaborative protocol set). Optionally, from a perspective of a communication technology, the terminal-network collaborative protocol set includes communication protocols on a plurality of communication technologies. For example, the terminal-network collaborative protocol set includes an RFID protocol, a BLE protocol, a Wi-Fi protocol, an ETH protocol, and the like. Optionally, from a perspective of a function of the network device, the terminal-network collaborative protocol set includes communication protocols corresponding to a plurality of functions. For example, the terminal-network collaborative protocol set includes at least one communication protocol of a link layer discovery protocol, a gateway discovery protocol, a security authentication protocol, and a device and application association protocol. From a perspective of the communication technology and a perspective of the function of the network device, optionally, a communication protocol corresponding to each function includes the communication protocols on the plurality of communication technologies.

When the network device is an access device of the target network, the link layer discovery protocol is used to implement a function of the terminal discovery unit. For example, the terminal discovery unit uses the link layer discovery protocol to discover the first terminal and the second terminal. In some examples, the terminal discovery unit is configured to use discovery protocols on different communication technologies in the link layer discovery protocol based on a link layer type of a terminal. For example, Wi-Fi uses a beacon frame to implement automatic discovery management, and ETH may use protocols such as DHCP, DNS, and 802.1X to implement automatic discovery management.

When the network device is a gateway, the terminal-network collaborative protocol set further includes a gateway discovery protocol, and the gateway discovery protocol is used to implement the function of the terminal discovery unit. In some examples, the terminal discovery unit supports multicast or broadcast of a discovery packet, to implement layer 2 and cross-layer 2 automatic discovery management.

The security authentication protocol is used to implement a function of the terminal registration unit and/or a function of the terminal authentication unit. In some examples, the terminal authentication unit uses the security authentication protocol, to implement lightweight certificate management, authentication, encryption, and the like, for example, registration application based on a constrained application protocol (constrained application protocol, CoAP).

The device and application association protocol is used to implement a function of the terminal communication unit. In some examples, the terminal communication unit uses the device and application association protocol, to implement association between the network device and an internet of things terminal, for example, dual fed and selective receiving of Wi-Fi and an access point (access point name, APN).

The network device may parse, based on the terminal-network collaborative protocol set, packets from terminal-side devices using different communication protocols, and may send, to the terminal-side devices, packets encapsulated by using corresponding communication protocols, so that terminal-side devices of different link types or different vendors centrally access a target network or the internet of things in which the network device is.

An implementation form of the device in the system architecture shown in FIG. 1 is not limited in this application. For example, the edge-side device may be a physical device or a virtual device, and the cloud-side device may be a physical device or a virtual device. A deployment location of the virtual device is not limited in this application. For example, the virtual device may be deployed in a public cloud, a private cloud, a local equipment room, or the like.

All modules in the controller are not limited to be deployed in a same physical device in this application. Optionally, at least two modules in the controller may be deployed in different physical devices. For example, the management module is deployed in a management server, the authentication module is deployed in an authentication server, and the service module is deployed in an application server.

In some examples, both the network device and the controller shown in FIG. 1 are virtual devices, and the network device and the controller are deployed on a same physical device, or at least one module of the network device and at least one module of the controller are deployed on a same physical device.

FIG. 4 shows an example of another possible structure of the target terminal. The target terminal is the first terminal or the second terminal shown in FIG. 1. Refer to FIG. 4. The target terminal includes a terminal-network collaborative apparatus (or referred to as a collaborative apparatus for short), and the terminal-network collaborative apparatus includes a network linkage module and/or a lightweight authentication module.

Optionally, the network linkage module includes at least one of a terminal automatic access unit, a terminal automatic gateway access unit, and a terminal-network collaborative unit.

When the network device shown in FIG. 1 is an access device of a target network, the terminal automatic access unit is configured to connect the target terminal to the network device. Optionally, the terminal automatic access unit is configured to generate access control information and send the access control information to the network device. Optionally, the access control information includes the discovery packet and/or the authentication request packet described above. Optionally, the terminal automatic access unit is configured to generate the access control information and/or encapsulate device information of a terminal and/or perform network access configuration of the terminal and/or the like based on a link type of the target terminal, to implement automatic network access of the terminal. The access control information generated by the terminal automatic access unit may vary with a link type of a terminal. For example, when the link type of the target terminal is Wi-Fi, the terminal automatic access unit encapsulates the access control information by using a beacon frame; or when the link type of the target terminal is ETH, the terminal automatic access unit encapsulates the access control information by using the 802.1X protocol.

When the network device shown in FIG. 1 is a gateway, the terminal automatic gateway access unit is configured to connect the target terminal to the network device. Optionally, the terminal automatic access unit is configured to generate access control information and send the access control information to the network device. Optionally, the access control information includes the discovery packet and/or the registration request packet and/or the authentication packet described above. Optionally, the terminal automatic gateway access unit is configured to implement functions such as gateway automatic discovery, gateway registration, gateway authentication, and secure transmission, where multicast and unicast modes, and other modes are used for the gateway automatic discovery.

The terminal-network collaborative unit is configured to implement information transfer between the terminal and the network device. Optionally, the terminal-network collaborative unit is configured to send the requirement information described above to the network device, so that the target terminal sends the network requirement policy, a policy for collaboration of the target terminal and the network device is implemented, and the like.

Optionally, the lightweight authentication module includes a lightweight authentication unit and/or a lightweight secure transmission unit.

The lightweight authentication unit provides a lightweight certificate function, to implement certificate miniaturization (for example, certificate compression), and provides a lightweight certificate storage system, a lightweight authentication framework, and the like, so that security authentication on a miniaturized terminal can be deployed and run.

The lightweight secure transmission unit is configured to construct a lightweight transmission channel based on the lightweight authentication unit, for example, a transport layer security (Transport Layer Security, TLS) protocol transmission channel or a datagram transport layer security (Datagram Transport Layer Security, DTLS) protocol transmission channel, to implement secure transmission of the miniaturized terminal.

Optionally, FIG. 4 is a functional block diagram of the target terminal. Optionally, the structure of the target terminal is shown in FIG. 2. The apparatus or the module shown in FIG. 4 is a software functional module generated after the processor 204 reads the program instructions stored in the memory 206. Division of software functional modules shown in FIG. 4 is merely logical function division.

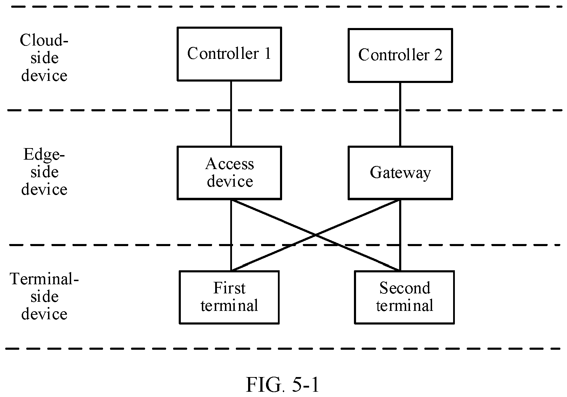

Optionally, the system architecture provided in this application may include more or fewer devices than those shown in FIG. 1. FIG. 5-1 shows an example of another possible structure of the system architecture in FIG. 1. Refer to FIG. 5-1. The system architecture includes at least two network devices and at least two controllers. The two network devices are respectively an access device of a target network and a gateway of the internet of things, and the two controllers are respectively a controller (denoted as a controller 1) of the target network and a controller (denoted as a controller 2) of the internet of things. For structures of the access device and the gateway, refer to FIG. 3. For example, the access device includes at least one of the terminal discovery unit, the terminal authentication unit, and the terminal communication unit that are described above, and the gateway includes at least one of the terminal discovery unit, the terminal registration unit, the terminal authentication unit, and the terminal communication unit that are described above.

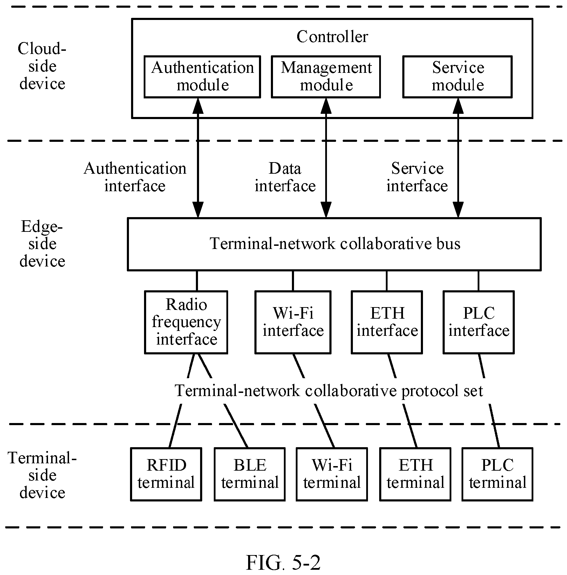

FIG. 3 describes a plurality of functional units of the network device. The plurality of functional units are configured to implement communication between different devices in the system architecture shown in FIG. 1, for example, communication between the terminal-side device and the network device, communication between the network device and the cloud-side device, and communication between the terminal-side device and the cloud-side device, to implement terminal-network collaboration. FIG. 5-2 shows an example of another possible structure of the system architecture in FIG. 1. Refer to FIG. 5-2. All or a part of the edge-side devices in the system architecture shown in FIG. 1 may be understood as a terminal-network collaborative bus shown in FIG. 5, to implement collaboration between a network (for example, a campus network) in which the edge-side devices are and the internet of things terminal. It should be noted that the terminal-network collaborative bus is a bus implemented by software. Therefore, the terminal-network collaborative bus is also referred to as a distributed soft bus.

Refer to FIG. 5-2. The terminal-network collaborative bus provides interfaces of a plurality of communication protocols, to communicate with terminal-side devices using the plurality of communication protocols. In FIG. 5-2, an RFID/BLE interface, a Wi-Fi interface, an ETH interface, and a PLC interface are used as examples rather than a limitation. The terminal-network collaborative bus may provide more or fewer interfaces than those shown in FIG. 5-2.

Refer to FIG. 5-2. The terminal-side devices using the plurality of communication protocols include but are not limited to at least one of an RFID terminal, a BLE terminal, a Wi-Fi terminal, an ETH terminal, and a PLC terminal. The RFID terminal is a terminal-side device supporting an RFID protocol, the BLE terminal is a terminal-side device supporting a BLE protocol, the Wi-Fi terminal is a terminal-side device supporting a Wi-Fi protocol, the ETH terminal is a terminal-side device supporting an ETH protocol, and the PLC terminal is a terminal-side device supporting a PLC protocol. The terminal-side device shown in FIG. 5-2 may be provided with the terminal-network collaborative apparatus described above to implement terminal-network collaboration. Optionally, refer to FIG. 5-2. The terminal-network collaborative bus may communicate with a plurality of terminal-side devices according to a protocol in the terminal-network collaborative protocol set described above.

Refer to FIG. 5-2. The terminal-network collaborative bus provides interfaces of a plurality of communication protocols, to respectively communicate with a plurality of modules in the controller. The terminal-network collaborative bus communicates with the authentication module through an authentication interface, communicates with the management module through a data interface, and communicates with the service module through a service interface. In FIG. 5-2, the authentication interface, the data interface, and the service interface are used as examples rather than a limitation. The terminal-network collaborative bus may provide more or fewer interfaces than those shown in FIG. 5-2.

An application scenario of the system architecture described in FIG. 1, FIG. 5-1, or FIG. 5-2 is not limited in this application. For example, the application scenario includes an internet of things scenario and an industrial internet scenario, and relates to a physical device and a campus network or a dedicated internet of things. The following provides a specific example of the application scenario.

Optionally, the application scenario is an enterprise office scenario. The terminal-side device includes a dumb terminal (for example, a wireless printer and/or a camera) in an enterprise office area. The system architecture is used to implement automatic and secure access of the dumb terminal in the enterprise office area to a communication network for enterprise office without network configuration.

Optionally, the application scenario is a logistics warehousing scenario. The terminal-side device includes a dumb terminal in a logistics warehousing area, for example, an automated guided vehicle (automated guided vehicle, AGV). The system architecture is used to implement automatic and secure access of the dumb terminal in the logistics warehousing area to a communication network for logistics warehousing without network configuration.

Optionally, the application scenario is a smart building scenario. The terminal-side device includes a dumb terminal in a smart building area, for example, a direct digital control (direct digital control, DDC) controller connected to an external Wi-Fi module. The system architecture is used to implement automatic and secure network access of the DDC controller without configuration, and automatically register an edge service of a smart building.

Optionally, the application scenario is a smart medical scenario. The terminal-side device includes a dumb terminal in a medical place, for example, a medical device such as an infusion pump connected to an external Wi-Fi customer premises equipment (Customer Premises Equipment, CPE). The system architecture is used to implement automatic and secure network access of the medical device without configuration, and automatically register an edge service.

The following describes several possible service procedures in the foregoing system.

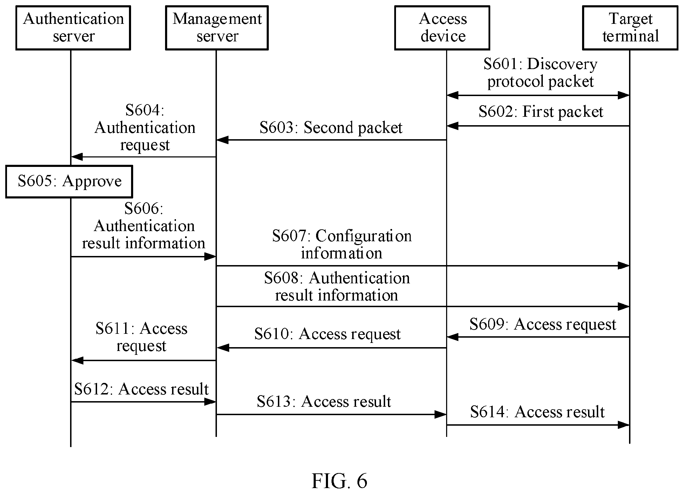

FIG. 6 shows an example of a procedure in which a target terminal automatically accesses a target network via an access device. Refer to FIG. 6. The automatic network access procedure may include steps S601 to S614. The access device shown in FIG. 6 may be understood with reference to the network device described above, and the target terminal shown in FIG. 6 may be understood with reference to the foregoing related content. An authentication server shown in FIG. 6 may include the authentication module shown in FIG. 1, and a management server may include the management module shown in FIG. 1.

S601: The target terminal and the access device exchange a discovery protocol packet.

The target terminal and the access device exchange the discovery protocol packet, so that the access device may discover the target terminal, and the target terminal may discover the access device. Optionally, the discovery protocol packet includes a discovery packet sent by the target terminal to the access device and a discovery response packet sent by the access device to the target terminal. For the discovery protocol packet, the discovery packet, and the discovery response packet, refer to the foregoing related content. Details are not described herein again.

Optionally, the access device performs step S601 via a terminal discovery unit, and the target terminal performs step S601 via a terminal automatic access unit.

For example, a link type of the target terminal is Wi-Fi. Optionally, the target terminal may interact with the access device based on a Wi-Fi beacon frame, and an automatic discovery flag (for example, iConnectV1) is defined based on an extension field of a beacon (Beacon) protocol, so that automatic access to a corresponding service set identifier (service set identifier, SSID) can be implemented. A specific implementation of the discovery protocol packet may be extended based on the link type of the target terminal. This is not limited herein.

S602: The target terminal sends a first packet to the access device.

After discovering the access device, the target terminal may send the first packet to the access device. The first packet carries electronic identity information of the target terminal. A protocol type of an authentication request packet is not limited. Optionally, the electronic identity information may be carried in an association (association) frame or a reassociation (reassociation) frame.

Optionally, the first packet is used to request to connect the target terminal to the target network.

S603: The access device sends a second packet to the management server.

The access device may encapsulate the second packet based on the electronic identity information of the target terminal, and send the second packet to the management server. A message format of the second packet is not limited in this application. For example, different formats may be used for the second packet based on different forms of the authentication server. For example, the authentication server is a remote authentication dial-in user service (remote authentication dial-in user service, RADIUS) system or a representational state transfer (Representational State Transfer, REST) system.

Optionally, the second packet is used to request to enable the target terminal to access the target network, and obtain authentication result information for the target terminal.

Step S602 is an optional step. In some examples, after discovering the target terminal by using S601, the access device may perform step S603. Optionally, the target terminal includes the electronic identity information in the discovery protocol packet in S601. In this way, a quantity of times of interaction between the target terminal and the access device is reduced, and overheads of the target terminal are reduced.

S604: The management server sends an authentication request to the authentication server.

After receiving the second packet, the management server may carry the electronic identity information of the target terminal to the authentication server for authentication. Optionally, the authentication server and the management server may be deployed in a same physical device. For example, refer to FIG. 5-1. A function of the authentication server and a function of the management server may be deployed in the controller 1.

For the authentication request, refer to the foregoing related content for understanding. Details are not described herein again.

S605: The authentication server approves the authentication request.

Optionally, the authentication server supports manual review and/or automatic review. For the automatic review, the authentication server may be connected to an internet of things identification system, and electronic identity information includes the electronic identity information of the target terminal.

S606: The authentication server sends the authentication result information to the management server.

After the approval is completed, the authentication server sends the authentication result information to the management server, where the authentication result information indicates that the target terminal is allowed or rejected to access the target network.

S607: The management server sends configuration information to the target terminal.

After the review is approved, optionally, the authentication server or the management server obtains the configuration information of the target terminal. Optionally, the configuration information includes an IP address of the target terminal. The management server may send the configuration information to the target terminal.

S608: The management server sends the authentication result information to the target terminal.

For the authentication result information, refer to the foregoing related content for understanding. Details are not described herein again.

When the authentication result information indicates that the authentication succeeds, the authentication result information may carry authentication information. The target terminal may store the authentication information for subsequent secondary authentication and automatic authentication. For the authentication information, refer to the foregoing related content for understanding. Details are not described herein again.

S609: The target terminal sends an access request to the access device.

The access request may carry the authentication information, to request to access the target network in which the access device is.

S610: The access device sends the access request to the management server.

S611: The management server sends the access request to the authentication server.

S612: The authentication server sends an access result to the management server.

The authentication server may authenticate the access request based on the authentication information, and send the access result based on an authentication result. The access result indicates that the target terminal is allowed or forbidden to access the target network.

S613: The management server sends the access result to the access device.

S614: The access device sends the access result to the target terminal.

When the access result indicates that access to the target network is allowed, the target terminal completes access to the target network.

Automatic network access of a terminal is a basic function of terminal-network collaboration. The procedure shown in FIG. 6 helps the target terminal access the target network without sensing, to plug and play.

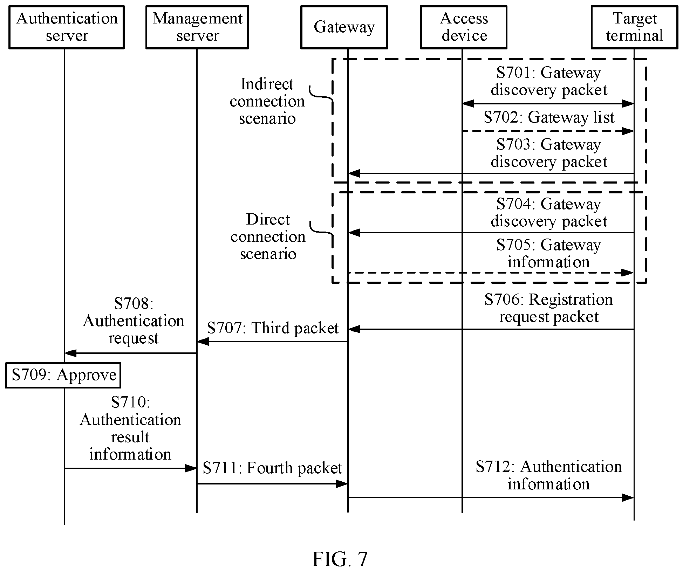

FIG. 7 shows an example of a procedure in which a target terminal accesses a gateway. Refer to FIG. 7. The automatic gateway access procedure may include steps S701 to S712. The gateway shown in FIG. 7 may be understood with reference to the network device described above, and the target terminal shown in FIG. 7 may be understood with reference to the foregoing target terminal. An authentication server shown in FIG. 7 may include the authentication module shown in FIG. 1, and a management server may include the management module shown in FIG. 1.

The target terminal supports automatic discovery of a gateway of cross-layer 2 and layer 2 networks. In a scenario in which the target terminal is not directly connected to the gateway, automatic discovery of the gateway by the target terminal is implemented by using steps S701 to S703 shown in FIG. 7.

S701: The target terminal sends a gateway discovery packet to an access device.

After accessing a target network in which the access device is, the target terminal may send the gateway discovery packet to the access device, to request to discover the gateway. Optionally, the target terminal sends the gateway discovery packet in a multicast manner.

S702: The access device sends a gateway list to the target terminal.

S703: The target terminal sends a gateway discovery packet to the gateway based on the gateway list.

The target terminal may select a gateway based on the gateway list, and send the gateway discovery packet to the gateway. The gateway discovery packet may carry electronic identity information of the target terminal. For content of the electronic identity information, refer to the foregoing related description. Details are not described herein again. Optionally, the target terminal sends the gateway discovery packet to the gateway in a unicast manner.

In a scenario in which the target terminal is directly connected to the gateway, automatic discovery of the gateway by the target terminal is implemented by using steps S704 and S705 shown in FIG. 7.

S704: The target terminal sends a gateway discovery packet.

Optionally, the target terminal may send the gateway discovery packet in a multicast manner.

S705: The gateway sends gateway information to the target terminal.

The gateway information may include an IP address of the gateway and/or basic information of the gateway and/or the like.

The target terminal, the access device, and the gateway may perform at least one of steps S701 to S705 according to a gateway discovery protocol. Optionally, the gateway discovery protocol may be based on CoAP, or based on CoAP and JS object notation (javascript object notation, JSON), or based on a multicast domain name system (multicast domain name server, MDNS) protocol, or the like.

Optionally, the discovery protocol packet described above includes the gateway discovery packet and/or the gateway information.

S706: The target terminal sends a registration request packet to the gateway.

After discovering the gateway, the target terminal may send the registration request packet to the gateway, where the registration request packet is used to request to register the target terminal. Optionally, the registration request packet may carry electronic identity information of the target terminal.

S707: The gateway sends a third packet to the management server.

The access device may encapsulate the third packet based on the electronic identity information of the target terminal, and send the third packet to the management server. Optionally, the third packet is used to request to enable the target terminal to access the gateway, and obtain authentication result information for the target terminal.

Step S706 is an optional step. In some examples, after discovering the target terminal, the gateway may perform step S707. Optionally, the target terminal includes the electronic identity information in the gateway discovery packet in S703 or S704. In this way, a quantity of times of interaction between the target terminal and the gateway is reduced, and overheads of the target terminal are reduced.

S708: The management server sends an authentication request to the authentication server.

After receiving the third packet, the management server may carry the electronic identity information of the target terminal to the authentication server for authentication. Optionally, the authentication server and the management server may be deployed in a same physical device. For example, refer to FIG. 5-1. A function of the authentication server and a function of the management server may be deployed in the controller 2.

For the authentication request, refer to the foregoing related content for understanding. Details are not described herein again.

S709: The authentication server approves the authentication request.

Optionally, the authentication server supports manual review and/or automatic review. For the automatic review, the authentication server may be connected to an internet of things identification system, and electronic identity information includes the electronic identity information of the target terminal.

S710: The authentication server sends the authentication result information to the management server.

After the approval is completed, the authentication server sends the authentication result information to the management server, where the authentication result information indicates that the target terminal is allowed or rejected to access the gateway. For the authentication result information, refer to the foregoing related content for understanding. Details are not described herein again.

S711: The management server sends a fourth packet to the target terminal.

After receiving the authentication result information, the management server sends the fourth packet to the target terminal. If the review is approved, the authentication server or the management server allocates a terminal identifier to the target terminal, and obtains authentication information of the target terminal. The terminal identifier (device ID) is, for example, an internet of things communication handle. The fourth packet carries the authentication information and the terminal identifier. For the authentication information, refer to the foregoing related content for understanding. Details are not described herein again. When the authentication information includes a certificate, optionally, the certificate may be an authentication certificate at an application layer.

S712: The gateway sends the authentication information to the target terminal.

When the review is approved, the gateway may send the authentication information to the target terminal. The target terminal may store the authentication information for subsequent secondary authentication and automatic authentication. For the authentication information, refer to the foregoing related content for understanding. Details are not described herein again.

The procedure shown in FIG. 7 helps the target terminal access the internet of things in which the gateway is located without sensing, to plug and play.

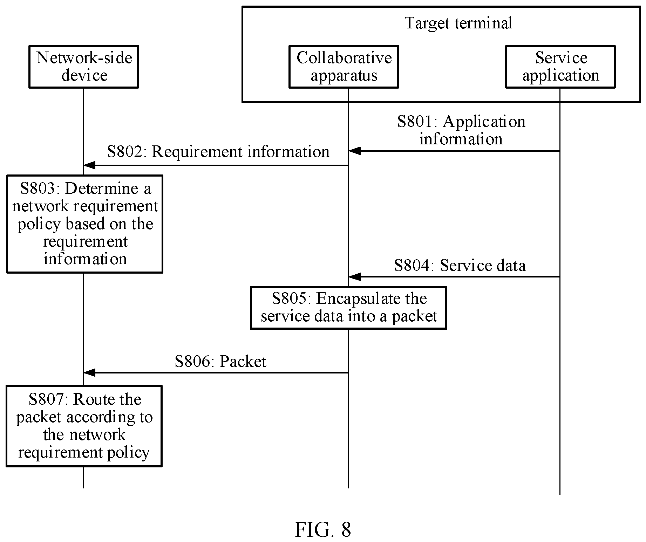

FIG. 8 shows an example of a procedure of collaboration between a target terminal and a network (referred to as terminal-network collaboration for short). Refer to FIG. 8. The procedure of the terminal-network collaboration may include steps S801 to S807.

Optionally, a network-side device shown in FIG. 8 includes the network device shown in FIG. 1 or FIG. 3, or includes the access device and/or the gateway shown in FIG. 5-1. Optionally, the network-side device shown in FIG. 8 further includes the controller shown in FIG. 1, or includes the controller 1 and/or the controller 2 shown in FIG. 5-1. Optionally, the network-side device shown in FIG. 8 may further include more network devices in a target network or the internet of things.

The target terminal shown in FIG. 8 may be provided with a collaborative apparatus (that is, the terminal-network collaborative apparatus shown in FIG. 4) and a service application. For understanding of the collaborative apparatus, refer to related content in FIG. 4. Details are not described herein again. Optionally, the service application is configured to interact data with a controller (for example, a service module in the controller) of the internet of things.

S801: The collaborative apparatus obtains application information of the service application.

Content of the application information is not limited in this application. Optionally, the application information includes an identifier of the service application and/or a type of the service application.

S802: The collaborative apparatus sends requirement information to the network-side device.

The collaborative apparatus may determine the requirement information about the service application for the network (the target network and/or the internet of things) based on the application information. Optionally, the requirement information includes at least one of the following information: a transmission bandwidth of data, a transmission delay of data, a transmission packet loss rate of data, and a transmission priority of data.

S803. The network-side device determines a network requirement policy of the target terminal based on the requirement information.

After receiving the requirement information sent by the target terminal, the network-side device may determine the network requirement policy of the target terminal based on the requirement information. Optionally, the network requirement policy indicates at least one of an encryption policy for the data, a scheduling policy for the data, and a caching policy for the data.

Optionally, the target terminal may send the requirement information to the access device shown in FIG. 5-1. Optionally, after receiving the requirement information, the access device shown in FIG. 5-1 forwards the requirement information to the controller 1, the controller 1 determines the network requirement policy of the target terminal, and delivers the network requirement policy to the network device in the target network.

Optionally, the target terminal may send the requirement information to the gateway shown in FIG. 5-1. Optionally, after receiving the requirement information, the gateway shown in FIG. 5-1 forwards the requirement information to the controller 2, the controller 2 determines the network requirement policy of the target terminal, and delivers the network requirement policy to the gateway in the internet of things.

S804: The service application sends service data to the collaborative apparatus.

The service application generates the service data and sends the service data to the collaborative apparatus. A type of the service data is not limited. It is assumed that the target terminal is a smart fire alarm device. Optionally, the service data may be detection data of ambient temperature of the target terminal.

S805: The collaborative apparatus encapsulates the service data into a packet.

After obtaining the service data, the collaborative apparatus may encapsulate the service data into the packet. For example, the collaborative apparatus selects a corresponding communication protocol based on a link type of the target terminal, to encapsulate the service data into the packet.

S806: The collaborative apparatus sends the packet to the network-side device.

The collaborative apparatus sends the packet to the network-side device. For example, the collaborative apparatus sends the packet to the gateway shown in FIG. 5-1, or the collaborative apparatus forwards the packet to the gateway by using the access device shown in FIG. 5-1.

S807: The network-side device routes the packet according to a network requirement policy.

After receiving the packet from the target terminal, the network-side device may route the packet according to the network requirement policy of the target terminal, to meet the requirement information of the service application for the network.

Optionally, in S802, the requirement information sent by the collaborative apparatus to the network-side device carries an identifier of the service application. In S803, the network-side device associates and stores the identifier of the service application and the network requirement policy. In S805, the collaborative apparatus encapsulates the service data and the identifier of the service application into the packet. In S807, the network-side device determines the network requirement policy of the target terminal based on the identifier of the service application, to route the packet according to the network requirement policy, and provide required network assurance and a network service for the service data of the service application.

Based on the system architecture shown in FIG. 1, FIG. 5-1, or FIG. 5-2, FIG. 6 provides a possible solution for the target terminal to automatically and securely access the target network without sensing. FIG. 7 provides a possible solution for the target terminal and the gateway to construct an automatic secure application transmission channel. FIG. 8 provides a possible solution for automatic discovery and announcement of an internet of things service of the target terminal. This helps implement collaboration and association between the target terminal and the network, implement an end-to-end process from automatic access of an internet of things terminal to terminal data collection and analysis, and implement services upon startup.

In the several embodiments provided in this application, it should be understood that the disclosed system and device may be implemented in other manners. For example, the device embodiment described above is merely an example. For example, the division of modules is merely a division of logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one position, or may be distributed on a plurality of network units. A part or all of the units may be selected based on actual requirements to achieve the objectives of the solutions of embodiments.

In addition, functional modules in embodiments of this application may be integrated into one processing unit, each of the modules may exist alone physically, or two or more modules are integrated into one unit. The integrated unit may be implemented in a form of hardware, or may be implemented in a form of a software functional unit.

In the specification, claims, and accompanying drawings of this application, the terms "first", "second", "third", "fourth", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. "A and/or B" in this application may be understood as including two solutions: "A and B" and "A or B". "A plurality of" in this application may be understood as two or more.

The objectives, technical solutions, and benefits of this application are further described in detail in the foregoing specific implementations. It should be understood that the foregoing descriptions are merely specific implementations of this application, but are not intended to limit the protection scope of this application. Any modification or improvement made based on the technical solutions of this application shall fall within the protection scope of this application.

## Claims

1. A network device, wherein the network device comprises at least one of a terminal discovery unit, a terminal registration unit, and a terminal authentication module;
the terminal discovery unit is configured to discover a first terminal and a second terminal that are connected to the network device, wherein the first terminal and the second terminal use different communication protocols;
the terminal registration unit is configured to register the first terminal and the second terminal with a controller; and
the terminal authentication unit is configured to perform at least one of authentication, certificate distribution, and secondary authentication on the first terminal and the second terminal.

2. The network device according to claim 1, wherein the network device further comprises a terminal communication unit, and the terminal communication unit is configured to separately route data for the first terminal and the second terminal.

3. The network device according to claim 2, wherein the network device further comprises a terminal-network collaborative unit, the terminal-network collaborative unit is configured to route data for a target terminal according to a network requirement policy of the target terminal, wherein the target terminal is the first terminal or the second terminal.

4. The network device according to claim 3, wherein the network requirement policy indicates at least one of an encryption policy for the data, a scheduling policy for the data, and a caching policy for the data.

5. The network device according to claim 3 or 4, wherein the network requirement policy is determined based on requirement information of the target terminal, and the requirement information indicates at least one of the following information:
a transmission bandwidth of the data, a transmission delay of the data, a transmission packet loss rate of the data, and a transmission priority of the data.

6. The network device according to any one of claims 1 to 5, wherein the first terminal and/or the second terminal are/is dumb terminals/a dumb terminal.

7. A communication system, comprising a first terminal, a second terminal, and a network device, wherein the first terminal and the second terminal use different communication protocols; and
the network device is configured to discover the first terminal and the second terminal that are connected to the network device, and/or register the first terminal and the second terminal with a controller, and/or perform at least one of authentication, certificate distribution, and secondary authentication on the first terminal and the second terminal.

8. The communication system according to claim 7, wherein the first terminal and/or the second terminal are/is configured to determine communication protocols/a communication protocol of the first terminal and/or the second terminal from a plurality of communication protocols based on link types/a link type of the first terminal and/or the second terminal.

9. The communication system according to claim 7 or 8, wherein the network device is further configured to separately route data for the first terminal and the second terminal.

10. The communication system according to claim 9, wherein the network device is further configured to route data for a target terminal according to a network requirement policy of the target terminal, wherein the target terminal is the first terminal or the second terminal.

11. The communication system according to claim 10, wherein the network requirement policy indicates at least one of an encryption policy for the data, a scheduling policy for the data, and a caching policy for the data.

12. The communication system according to claim 10 or 11, wherein the network requirement policy is determined based on requirement information of the target terminal, and the requirement information indicates at least one of the following information:
a transmission bandwidth of the data, a transmission delay of the data, a transmission packet loss rate of the data, and a transmission priority of the data.

13. The communication system according to claim 12, wherein the target terminal is configured to determine the requirement information based on application information of a service application, and send the requirement information to the network device.

14. The communication system according to any one of claims 7 to 13, wherein the first terminal and/or the second terminal are/is dumb terminals/a dumb terminal.

15. The communication system according to any one of claims 7 to 14, wherein the communication system further comprises the controller.
